# EUROPEAN PATENT SPECIFICATION

(11) **EP 2 942 502 B1**
(45) Date of publication and mention of the grant of the patent: **29.11.2017**
(21) Application number: 13869233.0
(22) Date of filing: 17.12.2013
(51) Int. Cl.: F01N 3/08, F01N 3/20, F01N 11/00

(54) **UREA WATER CONSUMPTION DIAGNOSTIC DEVICE FOR UREA SCR**
VORRICHTUNG ZUR DIAGNOSTIZIERUNG EINES HARNSTOFFWASSERVERBRAUCHS FÜR EINE SELEKTIVE KATALYTISCHE REDUKTION MIT HARNSTOFF
DISPOSITIF DE DIAGNOSTIC DE CONSOMMATION DE MÉLANGE D'EAU-URÉE POUR UNE SCR D'URÉE

(30) Priority: 28.12.2012 JP 2012288067
(43) Date of publication of application: 11.11.2015
(73) Proprietor: Isuzu Motors, Ltd., Tokyo 140-8722 (JP)
(72) Inventor: NIHONGI Shigeru, Fujisawa-shi Kanagawa 252-0881 (JP); TAKAHASHI Hirotaka, Fujisawa-shi Kanagawa 252-0881 (JP); MINEZAWA Masanobu, Fujisawa-shi Kanagawa 252-0881 (JP); FUKUOKA Takeshi, Fujisawa-shi Kanagawa 252-0881 (JP); SUZUKI Yutaka, Fujisawa-shi Kanagawa 252-0881 (JP); TAKAHASHI Kouichi, Fujisawa-shi Kanagawa 252-0881 (JP)
(74) Representative: Schaumburg und Partner Patentanwälte mbB
(86) International application number: PCT/JP2013/083748
(87) International publication number: WO 2014/103798

(56) References cited:
- EP-A1- 2 141 331
- EP-A1- 2 208 873
- EP-A1- 2 578 860
- JP-A- 2006 250 117
- JP-A- 2008 274 765
- JP-A- 2009 079 584
- JP-A- 2009 121 413
- JP-A- 2010 151 094

## Description

### TECHNICAL FIELD

The present invention relates to a urea SCR system for selectively reducing NOx contained in an exhaust gas of an engine with urea water, and more particularly to a urea water consumption diagnostic device for urea SCR that can accurately diagnose an amount of urea water sprayed (injected) from a dosing valve.

### BACKGROUND ART

An SCR system (selective catalytic reduction system) that uses a selective reduction catalyst is developed as an exhaust gas purification system to purify NOx contained in an exhaust gas of a diesel engine.

This SCR system supplies urea water, which is retained or pooled in a urea water tank, to an upstream exhaust gas of an SCR device to hydrolyze the urea water with the heat of the exhaust gas and generate ammonia. The SCR system then uses the ammonia to reduce NOx with a catalyst inside the SCR device, thereby purifying the exhaust gas. The urea water is sprayed from a dosing valve disposed upstream of the SCR device to supply the urea water to the upstream exhaust gas of the SCR device.

Feeding of the urea water to the dosing valve is carried out by a supply module that includes a supply module pump (SM pump), a urea water pressure sensor and other components. The supply module is connected to the urea water tank via a draw-in line (suction line), and supplies the urea water, which is drawn in from the urea water tank via the draw-in line, to the dosing valve through a pressurized urea water feed line extending between the supply module and the and the dosing valve. The dosing valve is controlled by a DCU (dosing control unit) such that opening and closing of the dosing valve is controlled in response to a detection value of a NOx sensor disposed downstream of the SCR device to adjust an amount of urea to be sprayed (urea spray volume).

A level (height or depth) of the urea water in the urea water tank is detected by a urea water sensor disposed in the urea water tank. A remaining amount of urea water is detected from the level of the urea water detected by the urea water sensor, and is used as a reference value for supplementation of the urea water.

Document EP 2 141 331 A1 discloses a urea water consumption diagnostic device according to the preamble of claim 1. According to this document, based on detection results of an NOx purification rate determining means for detecting the NOx purification rate by an NOx SCR, a urea aqueous solution feed amount detecting means for detecting the amount of feed of the urea aqueous solution, and a urea aqueous solution concentration detecting means for detecting the concentration of the urea aqueous solution, abnormalities in the NOx SCR, the urea aqueous solution feed system, and the urea aqueous solution are judged.

### LISTING OF REFERENCES

### PATENT LITERATURES

PATENT LITERATURE 1: Japanese Patent Application Laid-Open Publication No. 2011-247137
PATENT LITERATURE 2: Japanese Patent Application Laid-Open Publication No. 2012-2061

### SUMMARY OF THE INVENTION

### PROBLEMS TO BE SOLVED BY THE INVENTION

When the dosing valve for spraying (injecting) the urea water into the NOx catalyst is clogged with a foreign matter and/or the pressurized urea water feed line extending to the dosing valve is clogged with a foreign matter, there is provided no means for detecting such clogging. Also, when the dosing valve is stuck in an open condition due to adhesion of a foreign matter or the like, there is a problem, i.e., there is provided no means for detecting such situation.

An amount (volume) of urea water consumption may roughly be presumed (estimated) by detecting a change in the detection level of the urea water sensor in the urea water tank.

In view of such understanding, a difference between the instructed spray volume of the urea water by the DCU and an actual volume sprayed in accordance with the instruction, i.e., a consumption volume based on a detection value of the urea water sensor, is monitored. With this difference, it is possible to detect presence (occurrence) and absence of abnormal spraying from the dosing valve. However, the detection accuracy of the urea water sensor is designed to detect the urea level in a stepwise manner, and there is a problem, i.e., the detection accuracy is low.

The inventors of the instant application developed a diagnostic device. This diagnostic device takes, as a determination volume, a value when the level change in the consumption volume is no smaller than the tolerance (error range) of the urea water sensor. In the meantime, the DCU of the diagnostic device adds up the instructed spray volume. When the cumulative instructed spray volume exceeds the determination volume, the diagnostic device compares the cumulative instructed spray volume to the consumption volume, which is calculated from the level change obtained from the urea water sensor, to provide a difference therebetween. If this difference exceeds a threshold value, the diagnostic device determines that there is an abnormal consumption. Accordingly, the diagnostic device can determine presence and absence of the above-described situation even if the detection accuracy of the urea water sensor is low.

If the urea water is supplemented to the urea water tank while the cumulative consumption volume is approaching (reaching) the determination volume, it is necessary to subtract the supplemented volume from the calculated consumption volume. When the supplemented volume is detected, the liquid surface elevation due to an inclination of the vehicle, design tolerance of the sensor itself and other factors are considered. Thus, when there is a change beyond a value K1, which is no smaller than the tolerance ranges of these two factors, it is recognized that the supplementation is made. Then, the supplemented volume needs to be added to the consumption volume detected by the urea water sensor.

However, when the volume of supplementation is smaller than the value K1, the volume is taken as a detection error and is not regarded as the volume of supplementation. If this is repeated, an error volume becomes large relative to an actually consumed volume, and a problem arises, i.e., a wrong determination is made.

When the dosing valve is stuck in the open condition and keeps spraying the urea water, this situation cannot be detected based on the change in the level indicated by the urea water sensor.

In view of these facts, an object of the present invention is to overcome the above-described problems, and provide a urea water consumption diagnostic device for urea SCR, which is capable of detecting if the pressurized urea water feed line or the dosing valve is clogged or stuck with a foreign matter or if the dosing valve keeps spraying the urea water, even if a change in the urea water volume supplemented into the urea water tank is not detected and an actual volume of consumption thereof is not detected.

### SOLUTIONS TO THE PROBLEMS

In order to achieve the above-mentioned object a urea water consumption diagnostic device for urea SCR according to claim 1 is provided. The present invention provides a urea water consumption diagnostic device for urea SCR configured to suck urea water from a urea water tank with a supply pump and spray the urea water from a dosing valve disposed upstream of an SCR device via a pressurized urea water feed line, including: a NOx sensor disposed downstream of the SCR device; NOx purification rate determination means configured to receive a detection value of the NOx sensor and determine, based on the detection value, whether or not a NOx purification rate is in a prescribed value range; and abnormality diagnostic means configured to determine a difference between a urea water spray volume sprayed from the dosing valve and a urea water consumption volume in the urea water tank, and determine, based on presence and absence of urea water pressure abnormality which is derived from the NOx purification rate used by the NOx purification rate determination means, whether or not clogging of the urea water has occurred in a pressurized urea water feed line or the dosing valve.

Preferably, the urea water consumption diagnostic device further includes urea water spray volume instruction means, and the urea water spray volume instruction means is configured to decide a urea spray volume from the detection value of the NOx sensor. Preferably, the purification rate determination means is configured to decide the purification rate from detection values of NOx sensors disposed in front of and behind the SCR device.

Preferably, the abnormality diagnostic means is configured to diagnose that an abnormal situation has occurred when the NOx purification rate determination means determines that the NOx purification rate is smaller than the prescribed value and a difference between the urea water spray volume and the urea water consumption volume is no smaller than a threshold value.

The abnormality diagnostic means is configured to determine that a small volume of urea water is supplemented or returned to the urea water tank wherein the supplementation cannot be detected by a change in urea water consumption volume in the urea water tank (15) and configured not to perform abnormality diagnosis, if the NOx purification rate determination means determines that the NOx purification rate is no smaller than the prescribed value and the difference between the urea water spray volume and the urea water consumption volume is no smaller than the threshold value.

### ADVANTAGES OF THE INVENTION

The present invention monitors the NOx purification rate, which is obtained from the NOx sensor, and determines whether the NOx purification rate is in a normal range. Then, the present invention detects the difference between the instructed spray volume of the urea water and an actual consumption volume. This makes it possible to detect defects and malfunctioning, such as clogging of the dosing valve and the pressurized urea water feed line as well as unintentionally continued spraying due to the dosing valve being stuck in the open condition. When a small volume of supplementation, which cannot be detected by the DCU, is repeated and the difference between the urea spray volume detected by the DCU and the urea consumption volume detected by the level sensor exceeds the threshold value, then it is not determined that the urea consumption volume is abnormal as long as the purification rate is normal. It is therefore possible to detect an abnormal situation only when abnormality, such as clogging of a urea water spray passage, has actually occurred.

### BRIEF DESCRIPTION OF THE DRAWINGS

Fig. 1 is a schematic view of an SCR system according to one embodiment of the present invention.
Figs. 2a and 2b represent a continuous flowchart for consumption volume diagnosis of a urea water consumption diagnostic device for urea SRC according to the embodiment of the present invention.

### MODE FOR CARRYING OUT THE INVENTION

Now, a preferred embodiment of the present invention will be described in detail with reference to the accompanying drawings.

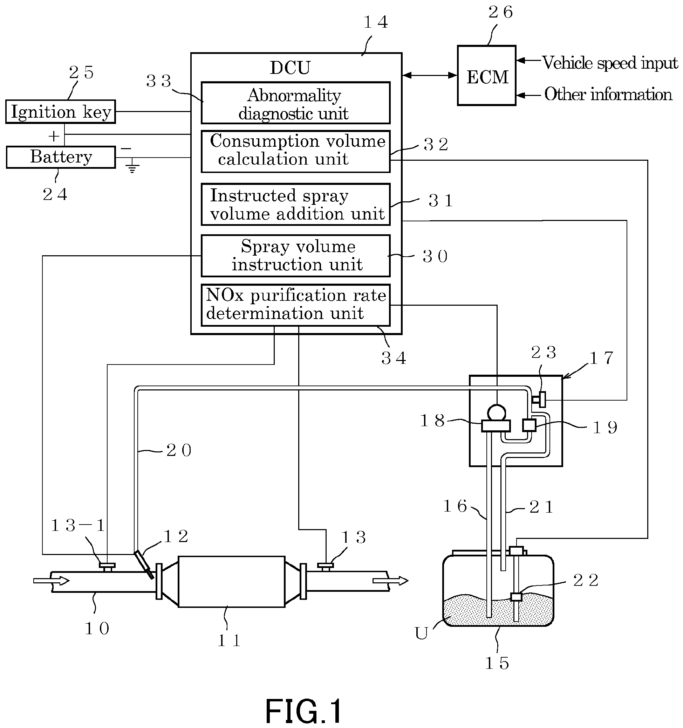

Fig. 1 illustrates a schematic configuration of an SCR system. An SCR device 11 is connected to an exhaust pipe 10 of a diesel engine (not shown), a dosing valve 12 is disposed upstream of the SCR device 11 for spraying (injecting) urea water, and a NOx sensor 13 is disposed downstream of the SCR device 11. Another NOx sensor 13-1 is disposed upstream of the SCR device 11 for detecting a NOx value prior to NOx purification.

A detection value of the NOx sensor 13 is entered to a DCU (dosing control unit) 14. Based on the detection value of the NOx sensor 13, closing and opening of the dosing valve 12 is controlled by the DCU 14 such that the NOx purification rate falls in a predetermined range.

Urea water U sprayed from the dosing valve 12 is retained (pooled) in a urea water tank 15. The urea water U is sucked in by a supply pump 18 of a supply module 17 via a suction line 16. Foreign matters are removed from the urea water by a filter 19, and the pressurized urea water U is sent to the dosing valve 12 from the supply pump 18 via a pressurized urea water feed line 20. Excessive urea water U is returned to the urea water tank 15 from the pressurized urea water feed line 20 via a return line 21 on the exit side of the filter 19.

A urea water sensor 22 is disposed in the urea water tank 15. The urea water sensor 22 measures a level of the urea water in the urea water tank 15, and sends the measured level to the DCU 14. A urea water pressure sensor 23 is disposed on the pressurized urea water feed line 20 for detecting a feeding pressure of the urea water. A pressure detected by the urea water pressure sensor 23 is sent to the DCU 14.

The DCU 14 calculates a volume (amount) of urea water to be sprayed to the SCR device 11 and timing of spraying the urea water. The DCU 14 drives the supply pump 18 to increase the pressure of the urea water to a prescribed pressure, and controls the opening and closing of the dosing valve 12 to spray an appropriate volume of urea water at appropriate timing.

In order to monitor that the urea water is appropriately sprayed from the dosing valve 12 and therefore the NOx value in the exhaust gas downstream of the SCR device 11 has a stable value, the NOx sensor 13 sends a measured value to the DCU 14.

The DCU 14 is connected to an ECM (engine control module) 26, which is primarily provided for fuel injection control. Vehicle speed information and other running information is entered to the ECM 26, and such information is sent to the DCU 14 from the ECM 26.

The DCU 14 is also connected to a battery 24, and an ON signal and an OFF signal of an ignition key 25 are entered to the DCU 14.

In this SCR system, the DCU 14 decides a spray instruction volume of urea water to be sprayed from the dosing valve 12 on the basis of the information of the ECM 26 such that a detection value of the NOx sensor 13 becomes stable (becomes a desired value). The DCU 14 controls the opening and closing of the dosing valve 12 on the basis of the decided volume.

Firstly, for the abnormality diagnosis of the urea water consumption volume, the DCU 14 includes a spray volume instruction unit 30 for instructing a volume of urea water to be sprayed from the dosing valve 12 based on the information of the ECM 26 and the detection value of the NOx sensor 13, an instructed spray volume addition unit 31 for adding up the spray volume instructed by the spray volume instruction unit 30, a consumption volume calculation unit 32 for calculating a cumulative consumption volume D from the detection value entered from the urea water sensor 22, and an abnormality diagnostic unit 33 for comparing the cumulative instructed spray volume P from the instructed spray volume addition unit 31 to the cumulative consumption volume D from the consumption volume calculation unit 32 to determine whether the urea water spraying from the dosing valve 12 is normal or abnormal.

When the diagnosis starts, the cumulative instructed spray volume P of the instructed spray volume addition unit 31 is reset to zero. At the same time, the consumption volume calculation unit 32 stores the level detected by the urea water sensor 22 as the level (S0). Subsequently, as the vehicle travels and the urea water is sprayed from the dosing valve 12, the instructed spray volume addition unit 31 successively adds up the instructed spray volume decided by the spray volume instruction unit 30, and stores the cumulative instructed spray volume P.

In order for the abnormality diagnostic unit 33 to detect whether the urea water spraying is normal or abnormal, a certain volume of urea water should be consumed (e.g., the consumed volume should be between several liters and nineteen liters) because otherwise the detection accuracy would not be high. Thus, when the vehicle's traveling is carried out several times, i.e., the ignition key 25 is turned on and off repeatedly, and the cumulative instructed spray volume P of the instructed spray volume addition unit 31 exceeds a determination volume L (e.g., 15 liters or 15L), then the consumption volume calculation unit 32 compares the cumulative consumption volume D to the cumulative instructed spray volume P to determine whether |D - P| > K1 is satisfied or not.

In this determination, if the urea water is appropriately sprayed, the cumulative consumption volume D is equal to the cumulative instructed spray volume P. When the difference between the cumulative consumption volume D and the cumulative instructed spray volume P is no greater than the value K1, which is decided on the basis of a level measurement tolerance (error range) of the urea water sensor 22, it is determined that the spraying is normal. If the difference is equal to or greater than the value K1, it is determined that the spraying is abnormal. In this determination, the absolute value of the difference between the two volumes is used for comparison. Thus, when there is no spraying due to a foreign matter or the like, D<<P is established and the value of D - P becomes minus. When the dosing valve 12 keeps spraying, D>>P is established and the value of D - P becomes plus. Accordingly, it is possible to determine from the value being plus or minus whether the clogging has occurred due to the stuck condition or the continuous spraying has occurred unintentionally from the dosing valve 12.

Because the urea water is supplemented to the urea water tank 15, the level indicated by the level sensor, which is the urea water sensor 22, is detected upon turning on and off of the key switch, and the consumption volume calculation unit 32 decides a supplemented volume based on the change in the level indicated by the level sensor. Specifically, the consumption volume calculation unit 32 adds up the supplemented volume from the start of the control until the diagnosis is performed. Then, the consumption volume calculation unit 32 obtains a cumulative consumption volume D of the urea water by adding the cumulative supplemented volume to the actual level change.

When the supplemented volume is large, it is possible to add up the supplemented volume. However, if a small volume of urea water is supplemented each time, then the supplementation cannot be detected by the change in the level detected by the urea water sensor 22. When this situation is repeated, a problem arises, i.e., discrepancy between the instructed spray volume and the cumulative consumption volume increases.

In order to avoid the above-described problem, the NOx purification rate determination unit 34 monitors the NOx purification rate of the NOx sensor 22. When the NOx purification rate is in a normal range, is no smaller than the prescribed value Q and the consumption volume is small relative to the instructed spray volume, then it is determined that a small volume of supplementation is repeated, and the discrepancy appears between the DCU instructed spray volume and the urea water consumption volume indicated by the urea water sensor. Thus, it is determined that the consumption volume is abnormal only if the NOx value is smaller than the prescribed value Q and the consumption volume relative to the instructed spray volume exceeds a threshold value.

When the abnormal consumption occurs with the consumption volume being considerably greater than the instructed spray volume, i.e., there is a large plus discrepancy, the determination is made based only on the discrepancy between the urea water instructed volume and the consumption volume, without relying on the NOx purification rate.

Now, the purification rate determination made by the NOx purification rate determination unit 34 will be described.

The spray volume instruction unit 30 decides the instruction spray volume of the urea water such that a detection value of the NOx sensor 13 falls in a normal range. However, the NOx sensor 13 cannot detect the NOx concentration in the exhaust gas that flows in the SCR device 11 although the NOx sensor 13 can detect the NOx concentration downstream of the SCR device 11.

The NOx purification rate determination unit 34 is configured to obtain the purification rate from the ratio of the NOx concentration detected by the upstream NOx sensor 13-1 to the NOx concentration detected by the NOx sensor 13, and determine whether the purification rate is no smaller than the prescribed value Q or not.

The NOx concentration on the entrance side varies with the running condition of the engine, but it is satisfactory if the value of NOx expelled from the exhaust pipe 10 is no greater than a legal regulation value. Therefore, the prescribed value Q of the purification rate is set to be equal to or greater than, for example, 90% in accordance with the engine characteristics.

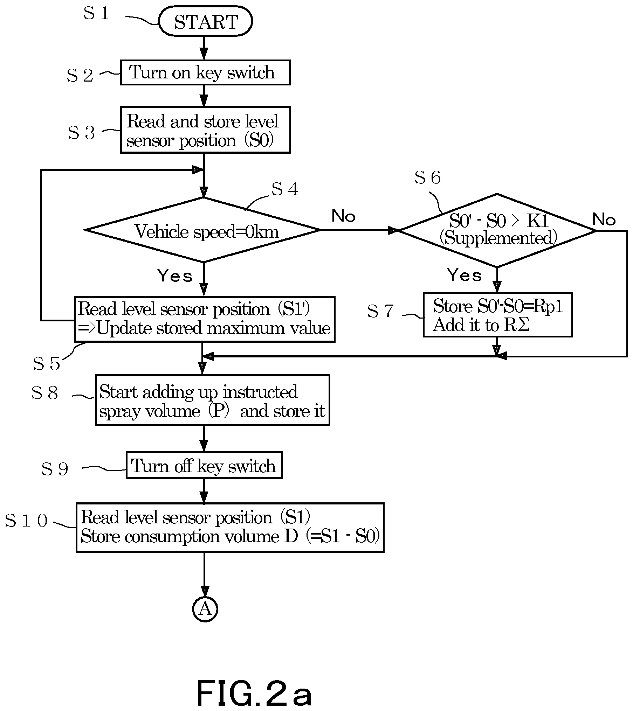

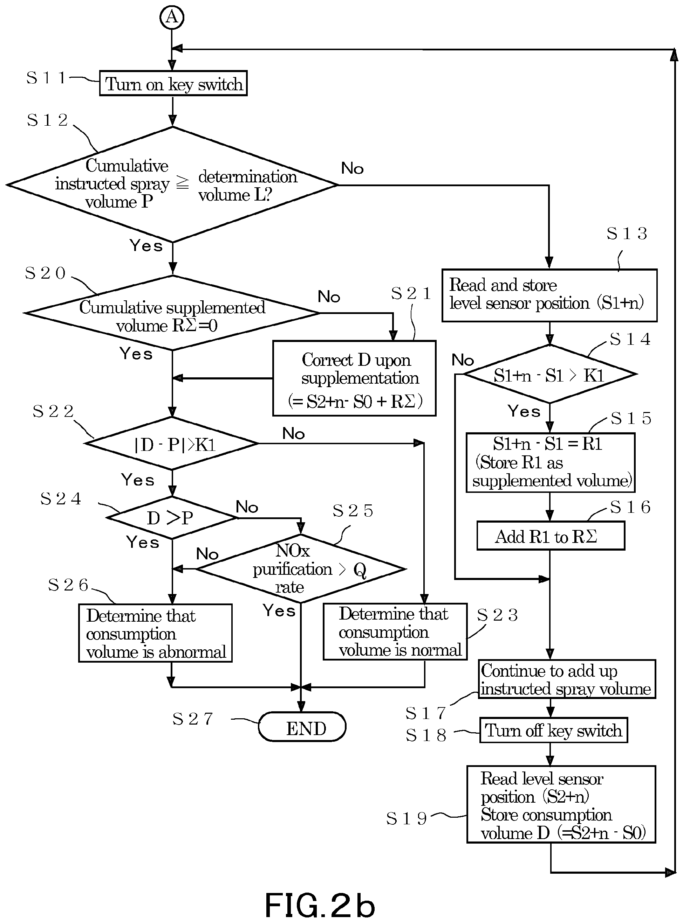

The diagnosis of this embodiment will be described with reference to the flowchart shown in Figs. 2a and 2b.

At Step S1, the diagnosis starts. When the key switch is turned on (Step S2), the urea water sensor reads and stores the initial level sensor position (S0) (Step S3). Subsequently, it is determined at Step S4 whether the vehicle speed is equal to 0km or not. If the vehicle is in a halt condition (Yes), the urea water sensor repeats the reading of the level sensor position (S0'). If the urea water is supplemented during the halt condition, the urea water sensor takes the level S0' as the maximum value, and updates and stores the level sensor position (Step S5). If the vehicle travels at Step S4 (No), it is determined at Step S6 whether the difference between the initially stored level S0 and the level S0' stored during the halt condition (S0' - S0) is greater than the value (K1), which is no less than the detection accuracy of the urea water sensor or no less than the tolerance (error range) (S0' - S0 > K1). If it is determined at Step S4 that the level has increased to the tolerance or more (Yes), S0' - S0 = Rp0 is established. The supplemented volume is added to the cumulative supplemented volume R∑ (Step S7). Then, the control proceeds to Step S8 to start adding up the instructed spray volume. If the difference between the level S0' and the initial level S0 falls within the tolerance (No), the control proceeds to Step S8. At Step S8, which starts the addition of the instructed spray volume, the instructed spray volumes are added up until the turning off of the key switch at Step S9. The level S0 of the urea water is stored. When the key switch is turned off at Step S9, the level sensor position S1, which is the level sensor position after the first time traveling since the start of the control, is read, and the cumulative consumption volume D (= S1 - S0) of the urea water at that point in time is stored (Step S10).

When the key switch is turned on at Step S11, it is determined at Step S12 whether the cumulative instructed spray volume P of the previous traveling reaches the determination volume L (P > L). The determination volume L is set to a value between several liters and nineteen liters, e.g., 15 liters.

If it is determined at Step S12 that the cumulative instructed spray volume P of the urea water does not reach the determination volume L (No), the control proceeds to Step S13 to read and store the level sensor position (S1₊ₙ). Then, in the determination of Step S14, the stored level (S1₊₁) is compared to the level S1, which is the level prior to turning on of the key switch at Step S11, to determine whether S1₊ₙ - S1 > K1 is established or not. This determines whether there is any supplementation of the urea water. If there is no supplementation (No), the control proceeds to Step S17. If there is supplementation (Yes), a calculation of S1₊ₙ - S1 = R1 is made at Step S20. R1 is stored as the supplemented volume. Then, the supplemented volume R1 is added to the cumulative supplemented volume R∑ at Step S15, and the program proceeds to Step S16. At Step S16, the instructed spray volume addition is continued. After that, if the key switch is turned off at Step S18, the level sensor position (S2₊ₙ) is read at Step S19. The cumulative consumption volume D (= S2₊ₙ - S1) is calculated based on this level (S2₊ₙ) and stored. Then, the program returns to the upstream of Step S11.

Subsequently, when the key switch is turned on at Step S11, it is determined again at Step S12 whether the cumulative instructed spray volume P of the urea water reaches the determination volume L. If the cumulative instructed spray volume P does not reach the determination volume L, the program returns to Step S11 from the above-described Steps S13-S19, and continues the adding up of the instructed spray volume P.

If it is determined at Step 12 that the cumulative instructed spray volume P reaches the determination volume L (Yes), then it is determined at Step S20 whether the cumulative supplemented volume R∑ is zero. If there is no supplementation (Yes), it is then determined at Step S22 whether |D - P| >K1 is established. If there is supplementation (No), the correction of the value D upon supplementation is made at Step S21 (D = S2₊₁ - S1 + R∑). Then, the program returns to the determination of Step S22.

If it is determined at Step S22 that the spraying of the urea water from the dosing valve is normal, the cumulative consumption volume D is substantially equal to the cumulative instructed spray volume P, i.e., zero. It falls within the detection tolerance K1 (No). Accordingly, it is determined at Step S23 that the consumption volume is normal, and the control is finished (Step S27).

When it is determined at Step S22, which compares the absolute value (|D - P|) to the value K1, that the absolute value is greater than the value K1 (YES), then at Step S24 the cumulative instructed spray volume P is compared to the consumption volume D to determine whether the cumulative instructed spray volume P is greater than the consumption volume D.

If it is determined at Step S24 that the dosing valve is stuck in the open condition and keeps spraying the urea water, the cumulative consumption volume D is sufficiently greater than the cumulative instructed spray volume P (Yes). Thus, it is determined at Step S26 that the consumption volume is abnormal.

If the cumulative consumption volume D is smaller than the cumulative instructed spray volume P, then it is determined at Step S25 whether or not the range of the NOx purification rate is no smaller than the prescribed value Q. If the NOx purification rate is smaller than the prescribed value Q (No), the dosing valve or the like is firmly fixed. Thus, it is determined at Step S26 that the consumption volume is abnormal.

If it is determined at Step S25 that the NOx purification rate is no smaller than the prescribed value Q (Yes), the supplemented volume is not added to the cumulative consumption volume D. This is not the abnormal situation, and therefore the control is finished (Step S27).

### REFERENCE NUMERALS AND SYMBOLS

- 10:: Exhaust pipe
- 11:: SCR device
- 12:: Dosing valve
- 13:: NOx sensor
- 15:: Urea water tank
- 22:: Urea water sensor
- 23:: Urea water pressure sensor
- 30:: Spray volume instruction unit
- 31:: Instructed spray volume addition unit
- 32:: Consumption volume calculation unit
- 33:: Abnormality diagnostic unit
- 34:: NOx purification rate determination unit

## Claims

1. A urea water consumption diagnostic device for urea SCR configured to suck urea water from a urea water tank (15) with a supply pump (18) and spray the urea water from a dosing valve (12) disposed upstream of an SCR device (11) via a pressurized urea water feed line (20), comprising:
a NOx sensor (13) disposed downstream of the SCR device (11);
NOx purification rate determination means (34) configured to receive a detection value of the NOx sensor (13) and determine, based on the detection value, whether or not a NOx purification rate is in a prescribed value range; and
abnormality diagnostic means (33) configured to determine a difference between a urea water spray volume sprayed from the dosing valve (12) and a urea water consumption volume in the urea water tank (15), and determine, based on the NOx purification rate used by the NOx purification rate determination means (34), whether clogging of the urea water has occurred in a pressurized urea water feed line (20) or the dosing valve (12),
**characterized in that** the abnormality diagnostic means (33) is configured to determine that a small volume of urea water is supplemented or returned to the urea water tank (15) wherein the supplementation cannot be detected by a change in urea water consumption volume in the urea water tank (15) and configured not to perform abnormality diagnosis, if the NOx purification rate determination means (34) determines that the NOx purification rate is no smaller than the prescribed value and the difference between the urea water spray volume and the urea water consumption volume is no smaller than the threshold value.

## Patentansprüche

1. Vorrichtung zur Diagnostizierung eines Harnstoffwasserverbrauchs für eine Harnstoff-SCR, die ausgebildet ist, Harnstoffwasser aus einem Harnstoffwassertank (15) mit einer Versorgungspumpe (18) anzusaugen und das Harnstoffwasser aus einem Dosierventil (12), das stromaufwärts einer SCR-Vorrichtung (11) angeordnet ist, über eine unter Druck gesetzte Harnstoffwasser-Versorgungsleitung (20) auszusprühen, umfassend:
einen NOx-Sensor (13), der stromabwärts der SCR-Vorrichtung (11) angeordnet ist;
ein NOx-Reinigungsraten-Bestimmungsmittel (34), das ausgebildet ist, einen Erfassungswert des NOx-Sensors (13) zu empfangen und auf Grundlage des Erfassungswertes zu bestimmen, ob eine NOx-Reinigungsrate in einem vorgeschriebenen Wertebereich ist oder nicht; und
ein Abnormalitätsdiagnosemittel (33), das ausgebildet ist, eine Differenz zwischen einem von dem Dosierventil (12) ausgesprühten Harnstoffwasser-Sprühvolumen und einem Harnstoffwasser-Verbrauchsvolumen in dem Harnstoffwassertank (15) zu bestimmen und auf Grundlage der von dem NOx-Reinigungsraten-Bestimmungsmittel (34) verwendeten NOx-Reinigungsrate zu bestimmen, ob in einer unter Druck gesetzten Harnstoffwasser-Versorgungsleitung (20) oder dem Dosierventil (12) eine Verstopfung des Harnstoffwassers aufgetreten ist,
**dadurch gekennzeichnet, dass** das Abnormalitätsdiagnosemittel (33) ausgebildet ist zu bestimmen, dass ein kleines Volumen an Harnstoffwasser zu dem Harnstoffwassertank (15) ergänzt oder zurückgeführt ist, wobei die Ergänzung nicht durch eine Änderung des Harnstoffwasser-Verbrauchsvolumens in dem Harnstoffwassertank (15) erfasst werden kann,
und ausgebildet ist, die Abnormalitätsdiagnose nicht durchzuführen, wenn das NOx-Reinigungsraten-Bestimmungsmittel (34) bestimmt, dass die NOx-Reinigungsrate nicht kleiner ist als der vorgeschriebene Wert und die Differenz zwischen dem Harnstoffwassersprühvolumen und dem Harnstoffwasserverbrauchsvolumen nicht kleiner ist als der Schwellwert.

## Revendications

1. Dispositif de diagnostic de consommation d'eau d'urée pour un SCR d'urée configuré pour aspirer l'eau d'urée contenue dans un réservoir d'eau d'urée (15) grâce à une pompe d'alimentation (18) et pour pulvériser l'eau d'urée au moyen d'une valve de dosage (12) placée en amont d'un dispositif de SCR (11) par l'intermédiaire d'une conduite d'alimentation d'eau d'urée sous pression (20), comprenant :
un capteur de NOx (13) installé en aval du dispositif de SCR (11);
un moyen de détermination du taux de purification de NOx (34) configuré pour recevoir une valeur de détection du capteur de NOx (13) et déterminer, en se fondant sur la valeur de détection, si le taux de purification de NOx se trouve dans une plage de valeurs spécifiées ou non ; et
un moyen de diagnostic d'anomalie (33) configuré pour déterminer une différence entre un volume de pulvérisation d'eau d'urée pulvérisé grâce à la valve de dosage (12) et un volume de consommation d'eau d'urée dans le réservoir d'eau d'urée (15), et pour déterminer, en se fondant sur le taux de purification du NOx utilisé par le moyen de détermination du taux de purification de NOx (34) si un engorgement d'eau d'urée s'est produit à l'intérieur de la conduite d'alimentation d'eau d'urée sous pression (20) ou de la valve de dosage (12),
**caractérisé en ce que** le moyen de diagnostic d'anomalie (33) est configuré pour déterminer qu'un faible volume d'eau d'urée a été ajouté ou renvoyé au réservoir d'eau d'urée (15) dans lequel l'ajout ne peut pas être détecté par une modification du volume de la consommation d'eau d'urée dans le réservoir d'eau d'urée (15),
et configuré pour ne pas exécuter de diagnostic d'anomalie, si le moyen de détermination du taux de purification de NOx (34) détermine que le taux de purification de NOx n'est pas inférieur à la valeur spécifiée et que la différence entre le volume de la pulvérisation d'eau d'urée et le volume de la consommation d'eau d'urée n'est pas inférieure à la valeur de seuil.
